# EUROPEAN PATENT SPECIFICATION

(11) **EP 0 970 924 B1**
(45) Date of publication and mention of the grant of the patent: **04.06.2003**
(21) Application number: 98830670.0
(22) Date of filing: 06.11.1998
(51) Int. Cl.: C03B 33/10, C03B 33/027

(54) **Apparatus for cutting glass plates**
Vorrichtung zum Schneiden von Glasscheiben
Appareil pour découper des feuilles de verre

(30) Priority: 06.07.1998 IT TO980589
(43) Date of publication of application: 12.01.2000
(73) Proprietor: BIESSE S.p.A., 61100 Pesaro (IT)
(72) Inventor: Selci, Giancarlo, 61100 Pesaro (IT)
(74) Representative: Notaro, Giancarlo

(56) References cited:
- WO-A-93/23216
- US-A- 4 083 274

## Description

The present invention relates to the field of apparatus for cutting glass plates.

According to the prior art, the apparatus of this type include:
- a bed,
- a supporting board for the glass plates, carried by the bed, which in some cases is adapted to be tiltable from its horizontal work position to an inclined position for loading the plate to be worked,
- a gantry-like carriage movable on the bed along a first horizontal axis,
- a second carriage movable on the gantry-like carriage along a second horizontal axis perpendicular to the first axis,
- a head carrying a cutting tool and movable on the second carriage along a vertical axis, and also rotatable around this vertical axis,
- motor means for driving movement of the gantry-like carriage, the second carriage and the head, and
- programmable electronic means for controlling said motor means.

Typically, the cutting tool is constituted by a freely rotatably supported wheel which is caused to roll on the glass plate so as to form an incision (i.e. without cutting the glass plate throughout its whole thickness) to enable subsequent separation of the two parts of the plate along the incision line. The diameter of the cutting wheel, the rake angle of its cutting edge and the thickness of the wheel can be chosen as a function of the type of glass. Therefore, it is generally necessary to replace the tool while the apparatus is being used. According to the prior art, this replacement is carried out manually with operations which are relatively troublesome and time-consuming. As a matter of fact, the cutting wheel is relatively small (in the order of 10 millimeters) and thus there is the possibility that it falls from the operator hands and gets lost during the assembling or disassembling operations. The operator must make use of gloves for manipulating the plates but must take the gloves off for removing or mounting the tool. There is also the possibility of errors in the assembling operation, since the various available tools cannot be easily distinguished from each other due to their reduced dimensions. The above described operations also greatly increase the apparatus downtimes, since the replacement must be carried out when the apparatus is not operating. This implies low productivity of the apparatus when the type of glass to be worked is frequently changed.

The cutting apparatus according to the prior art are dedicated to this specific operation and therefore it is necessary to provide further apparatus upstream and/or downstream of the cutting apparatus in case other types of operations are requested (such as engraving or cutting of plastic films covering the plate). This results in high investments and huge space occupied.

Given the above indicated problems connected with the replacement of the tool, quite often the chosen tool is the result of a compromise, both with respect to the rake angle of the wheel, and with respect to the force applied thereto. As a consequence, the final product cannot have a high quality and frequent ruptures of the glass plates take place since the solution which is being used is the result of a compromise or an arbitrary choice of the operator.

A further problem which takes place in the cutting machines of the above indicated type lies in that quite often with the gantry-like carriage there are associated one or more auxiliary heads for carrying out special works which imply a great additional weigh (even in the order of 10 kilos) which is constantly applied to the carriage (even when these special works are not necessary) with resulting problems in moving the carriage, higher energetic consumptions, greater rigidity of the structure and decrease in the apparatus performance in terms of acceleration, deceleration and speed.

The object of the invention is that of providing an apparatus for cutting glass plates which is able to overcome all the above mentioned drawbacks.

In view of achieving this object, the invention provides an apparatus which is defined in claim 1.

Due to the defined features, the apparatus according to the invention is able to solve all the above mentioned problems efficiently.

It is to be noted that the use of apparatus for carrying out operations on glass plates, such as grinding or bevelling of glass plates, provided with magazines of tools which are automatically interchangeable is known per se. However, the use of a tool magazine in a cutting apparatus goes against a technical prejudice, since cutting apparatus have been considered heretofore as relatively simple and dedicated machines, in which simplicity and low cost of manufacture are considered more important than the needs of flexibility of operation. On the other hand, the invention does not lie in the mere application of a tool magazine to a cutting apparatus, but also in the specific arrangement of this magazine and in the provision of a tool holder for each tool provided at the magazine.

The apparatus according to the invention may further include a magazine of auxiliary heads for carrying out special operations, including at least one auxiliary head which can be coupled to the gantry-like carriage of the apparatus. Due to this feature, the auxiliary head can be associated with the gantry-like carriage only when a special operation is requested, whereby the weight of the auxiliary head is not applied permanently on the carriage.

In a preferred embodiment, the coupling section of the tool holder element has a substantially conical shape, with a substantially cylindrical end portion having a circumferential recess, whereas the head has a conical seat with a shape complementar to that of said coupling section, wherein spring means (such as a ring formed by a metal wire helically wound) are mounted which are adapted to cooperate with said circumferential recess for snap mounting of the coupling section within said seat.

Naturally, the above mentioned electronic control means are adapted to control the tool change cycle in a manner which can be programmed by the user.

A further feature of the above mentioned preferred embodiment of the invention lies in that said magazine has a rack with a plurality of supporting posts for respective tool holder elements, each provided with the respective tool, and said rack is movable vertically between a rest lowered position, lying below the plate supporting board, and a raised operative position, projecting above said supporting board. Preferably, there is further provided a lid which covers the magazine at the top when the latter is in said lowered rest position, said lid being movable between an operative position and an inoperative position, in which it enables the magazine to be raised from the lowered rest position to the operative raised position.

Naturally, it is possible to adopt various variants, in particular with reference to the arrangement of the magazine, which for instance can have an in-line arrangement, or a revolver-type arrangement, with tools arranged radially on a rotating disk having a plurality of peripheral posts.

Further features and advantages of the invention will become apparent from the following description with reference to the annexed drawings, given purely by way of non limiting example, in which:
figure **1** is a perspective view of a preferred embodiment of an apparatus for cutting glass plates, according to the present invention,
figure **2** is a diagrammatic plan view of the apparatus of figure 1,
figure **3** is a side view at an enlarged scale of a detail of the apparatus of figure 1, in a first operative condition,
figure **4** shows the detail of figure 3 in a second operative condition,
figure **5** is a front view of the detail shown in figures 3, 4, and
figures **6**, **7** are an exploded perspective view and a cross-sectional view in an assembled condition of the tool holder element within the respective seat provided in the apparatus head.

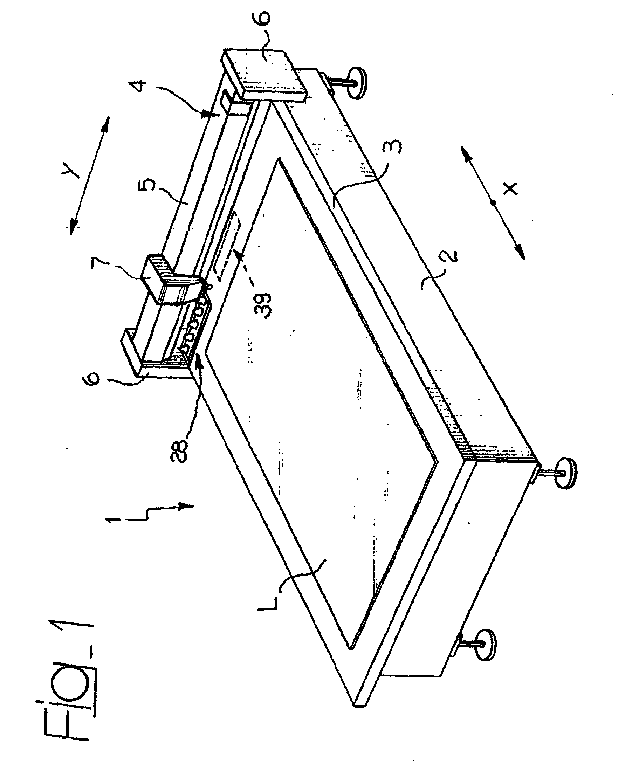

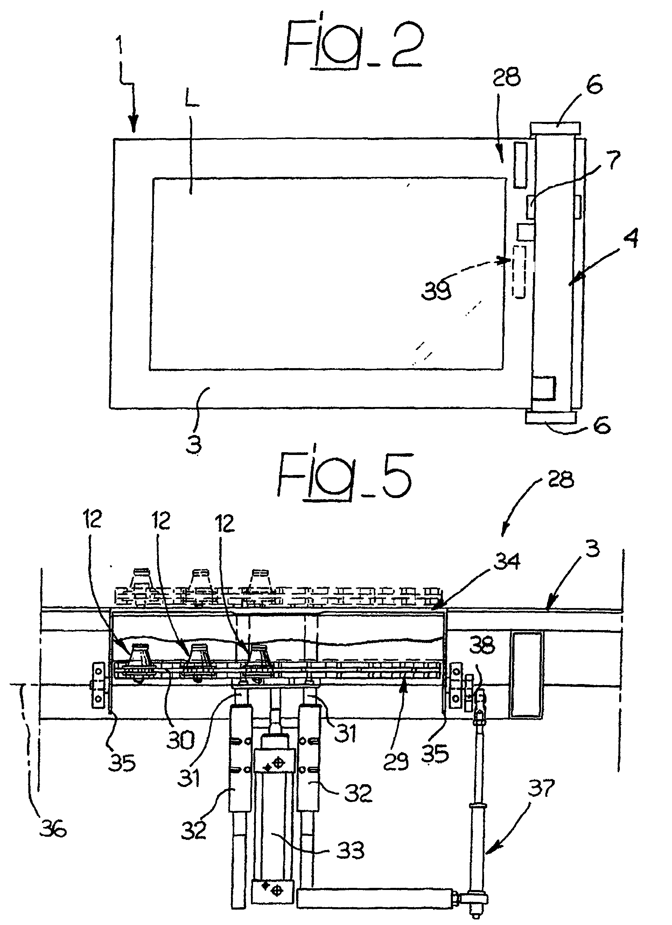

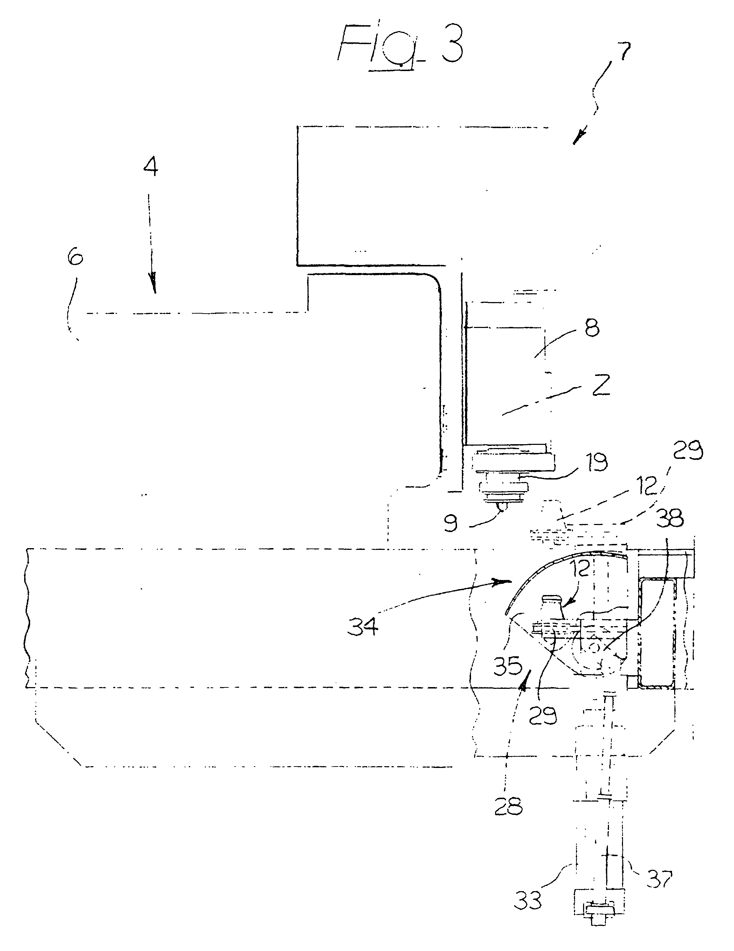

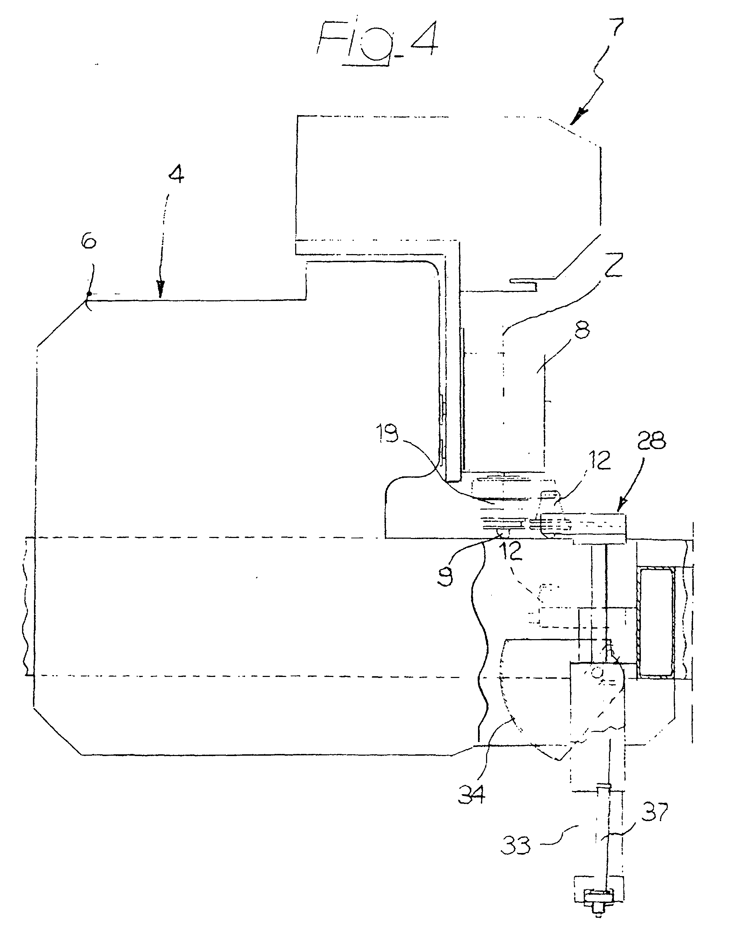

In figure 1, reference numeral 1 generally designates an apparatus for cutting glass plates comprising a bed 2, a supporting board 3 for the glass plates L, which may be of the type which is tiltable from the horizontal operative position to an inclined position, for loading and unloading the plate L, a gantry-like carriage 4 movably mounted on the bed 2 along an axis X, constituted by a cross-member 5 supported by two end units 6 which are slidably mounted on the two sides of the bed 2. A carriage 7 is slidably mounted along an axis Y which is horizontal and perpendicular to the axis X of the gantry-like carriage 5. With reference in particular to figures 3, 4, on the carriage 7 there is mounted a head 8 vertically movable along an axis Z and carrying a cutting wheel 9 (better seen in figures 6, 7) with the further possibility of rotating around axis Z.

The details of construction of the bed 2, the gantry-like carriage 4, the carriage 7 and the head 8 are not described and shown herein, since they can be made in any known way and anyhow they do not fall, taken alone, within the scope of the present invention. Furthermore, the deletion of these details from the drawings renders the latter simpler and easier to understand.

With reference to figures 6, 7, the cutting wheel 9 is freely rotatably supported around a horizontal axis 10 by one end of a cylindrical body 11 which is rigidly connected within a tool holder element 12. In the example shown in the drawings, the tool holder element 12 has a substantially conical body, having a substantially cylindrical end portion 13 defining a circumferential recess 14. At the opposite end, the conical body 12 of the tool holder element has two parallel annular flanges 15 having two corresponding slots 16. The body 11 carrying the wheel 9 is rigidly received within a seat 17 formed at one end of the tool holder element 12. The latter is for snap engagement within a conical seat 18 (see figure 7) of a female member 19 rigidly connected to the head 8 by engagement of a screw (not shown) within an axial threaded hole 20. The axial retention of the coupling is ensured by the engagement of a spring 21, which in the illustrated example is constituted by a ring formed by a helically wound metal wire on the circumferential recess 14 of the tool holder element 12. The spring 21 is housed within a circumferential groove 22 formed in the wall of complementary shape of the seat 18. In the coupling condition, an axial pin 23 which projects from the base of the female member 19 engages the slot 16 of the flange 15 which is most adjacent thereto, so as to form a reference for the proper angular position of the tool holder element 12. The female member 19 and the tool holder element 12 further have inner channels 24, 25, 27 with a gasket 26 for the supply of a lubricant to the tool. A similar channel is also formed within the body 11 carrying the wheel 9, even if this channel is not shown in the drawings.

The axial retention provided by spring 21 is sufficient for the proper operation of the apparatus, since during this operation this retention must be sufficient only to overcome the weight of the tool holder element 12, when the tool is hanging above. However, when the tool is applied on the plate, a pressure is applied to the tool tending to press even further the two elements 12, 19 into engagement with each other.

For a quick tool change, the apparatus according to the invention is provided with a magazine of tools 28, which in the illustrated example has an in-line arrangement of posts carrying a plurality of tool holder elements with the respective tools associated therewith. As already indicated, it is possible however to adopt any different geometry of the magazine.

With reference in particular to figures 5 and 3, 4, the magazine 28 includes a rack 29 defining a plurality of posts which are arranged in-line where an identical number of tool holder elements 12 with the respective tools are deposited. The rack comprises a horizontal plate 30 with a receiving slot at each post, each tool holder element 12 being arranged with its two end flanges 15 respectively above and below the plate 30 and with the slot 16 of the lowermost plate 15 engaged by an axial pin (not shown in the drawings) carried by the rack, so that each tool holder element is carried by the rack at a predetermined angular position. The rack 29 is slidable vertically between an inoperative lowered position (shown by undotted lines in figure 5 and figure 3) below the supporting board 3, and a raised operative position (shown by dotted lines in figure 3 and figure 5 and by undotted lines in figure 4) in which it projects above the supporting board 3. The vertical movement of the rack 29 is guided by means of the engagement of two vertical cylindrical columns 31 rigidly connected to the rack within two guiding vertical cylinders 32 carried by the bed. A fluid cylinder 33 controls the movement of rack 29 between its lowered position and its raised position. In the lowered position, the rack is covered by a lid 34 (figure 3) constituted by an elongated wall having an arched cross-section, supported at its ends by two walls 35 which are pivotally supported around a horizontal axis 36 (figure 5). The lid 38 can be tilted between an operative position (shown by undotted lines in figure 3) in which it covers the magazine 28 when the latter is in its lowered position, and an inoperative position, in which the lid is rotated downwardly by 90° (figure 4) so as to enable the magazine 28 to be raised. The rotation of lid 34 is controlled by a cylinder 37 by means of a crank 38 connected to the lid structure and rotatably supported around axis 36.

In the present description, the motor means provided in the apparatus for controlling movements of carriage 4, carriage 7 and head 8 are not shown, since they can be made in any known way. Also not shown are the electronic control means, of a programmable type, which provide for controlling these motor means. They are further adapted to automatically control replacement of the tool provided on the apparatus head according to a predetermined program. When the tool must be replaced, the head 8 is moved close to the magazine 28 which meanwhile has been brought to the operative position shown in figure 4, upon lowering the lid 34. The tool holder element 12 mounted on the head is carried in front of an empty seat of the rack 29, at the position shown in figure 4, and is caused to enter therein by a horizontal movement, which brings the two end flanges 15 of the tool holder element 12 to be located respectively above and below the horizontal plate 30 of the rack. In this manner, a subsequent vertical upward movement of the head causes the separation of the tool holder element 12 from the seat 18, since the tool holder element is held against vertical movement by the plate 30 of the rack. The spring 21 allows this separation, since it is not able to overcome the axial disengaging force. The head 8 is then brought above a tool holder element 12 to be picked up and then vertically lowered thereon, so as to obtain a snap coupling by means of the engagement of the spring 21 within the circumferential recess 14 of the tool holder element 12. When coupling has been made, the head 8 is moved horizontally and perpendicularly to the longitudinal direction of the plate 30, so as to enable the selected tool holder element 12 to come out of the rack, by causing the two end flanges 15 to slide above and below the wall 30. The head 8 is then able to start working again, whereas magazine 28 is brought again to its lowered rest position and covered by moving the lid 34 to its operative position.

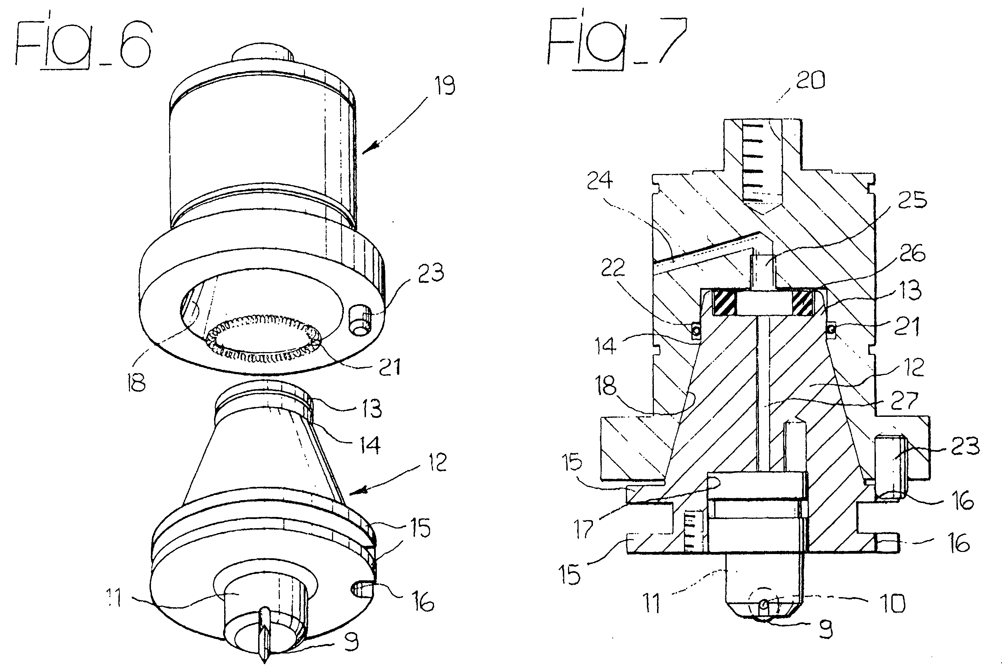

In figure 2, by dotted lines there is diagrammatically shown a further magazine 39 for auxiliary heads for carrying out special works, comprising at least one head of this type which constitutes an independent unit including a tool and the associated control motor means for carrying out specific operations which are different from the simple cutting operation. The arrangement of magazine 39 may be similar to that of magazine 28, the coupling means between the auxiliary head and the carriage 4 being also of a type similar to that disclosed above with reference to head 8 and the tool holder element 12. In this manner, when there is no need to carry out specific operations, the carriage 4 does not carry any auxiliary head, so that it is not subjected to any undesired additional weight.

From the foregoing description, it is clearly apparent that the apparatus according to the invention overcomes all the problems of the prior art which have been indicated at the beginning efficiently. At the same time, the specific shape and arrangement of the magazine which has been described above with reference to the preferred embodiment of the invention enables further advantages in terms of simplicity and efficiency to be obtained.

## Claims

1. Apparatus for cutting glass plates, comprising:
- a bed (2),
- a supporting board (3) for the glass plates (L), carried by the bed (2),
- a gantry-like carriage (4) movable on the bed (2) along a first horizontal axis (X),
- a second carriage (7) movable on the gantry-like carriage (4) along a second horizontal axis (Y) perpendicular to the first axis (X),
- a head (8) carrying a cutting tool (9) movable on the second carriage (7) along a vertical axis (Z), and also rotatable around this axis (Z),
- motor means for driving movements of the gantry-like carriage (4), the second carriage (7) and the head (8), and
- electronic control means for said motor means,
**characterized in that** the tool (9) is permanently connected to a tool holder element (12) having a coupling section which is removably connected to the head (8), and **in that** the apparatus further includes at least one magazine of tools (28) carried by the bed (2), in which each tool (9) is permanently connected to a respective tool holder element (12) having a coupling section for coupling with the head (8), so that the apparatus is able to provide by itself for quick replacement, if necessary, even during loading or unloading of a glass plate, of the tool (9) with the respective tool holder element (12) coupled with the head (8) with any other tool (9) with the respective tool holder element (12) provided at the magazine (28), by moving the head (8) adjacent to an empty post of the magazine, subsequently depositing a tool with the respective tool holder element (12) to be replaced within said empty post, and then picking up a new tool (9) with the respective tool holder element (12) from another post of said magazine.

2. Cutting apparatus according to claim 1, **characterized in that** the apparatus further comprises a magazine of auxiliary heads (39) for carrying out special operations, including at least one auxiliary head which can be coupled with the gantry-like carriage (4) of the apparatus.

3. Cutting apparatus according to claim 1, **characterized in that** the coupling section of the tool holder element (12) has a substantially conical shape with a substantially cylindrical end portion (13) having a circumferential recess (14), and the head (8) has a conical seat (18) with a shape complementar to that of said coupling section, where there are mounted spring means (21) adapted to cooperate with said circumferential recess (14) for snap engagement of the coupling section within said seat.

4. Cutting apparatus according to claim 1, **characterized in that** said electronic control means are adapted to control the tool change cycle in a manner programmable by the user and if necessary during the loading and unloading of the glass plate.

5. Cutting apparatus according to claim 1, **characterized in that** said magazine (28) includes a rack (29) with a plurality of supporting posts for respective tool holder elements (12), each associated with the respective tool (9), and **in that** said rack is vertically movable between a lowered rest position below the supporting board (3) of the plate (L) and a raised operative position projecting above said supporting board (3).

6. Cutting apparatus according to claim 1, **characterized in that** a lid (34) is provided which covers the magazine (28) at the top when the latter is in said lowered rest position, said lid (34) being movable between an operative position and an inoperative position, in which it enables the magazine to be raised from the lowered rest position to the raised operative position.

## Patentansprüche

1. Gerät zum Schneiden von Glasscheiben, umfassend:
- ein Bett (2),
- eine Unterlagetafel (3) für die Glasscheiben (L), die von dem Bett (2) getragen wird,
- einen portalartigen Wagen (4), der auf dem Bett (2) entlang einer ersten waagerechten Achse (X) bewegbar ist,
- einen zweiten Wagen (7), der auf dem portalartigen Wagen (4) entlang einer zweiten waagerechten Achse (Y) rechtwinklig zu der ersten Achse (X) bewegbar ist,
- einen Kopf (8), der ein Schneidwerkzeug (9) trägt, das auf dem zweiten Wagen (7) entlang einer senkrechten Achse (Z) bewegbar und auch um diese Achse (Z) drehbar ist,
- Motormittel zum Antreiben von Bewegungen des portalartigen Wagens (4), des zweiten Wagens (7) und des Kopfes (8), und
- elektronische Steuerungsmittel für das Motormittel,
**dadurch gekennzeichnet, dass** das Werkzeug (9) dauerhaft an ein Werkzeughalterungsmittel (12) angeschlossen ist, das einen Verbindungsabschnitt aufweist, der an den Kopf (8) entfernbar angeschlossen ist, und dass das Gerät ferner wenigstens ein Werkzeugmagazin (28) beinhaltet, das von dem Bett (2) getragen wird, in dem jedes Werkzeug (9) dauerhaft an das jeweilige Werkzeughalterungsmittel (12) angeschlossen ist, wobei es einen Verbindungsabschnitt zur Verbindung mit dem Kopf (8) aufweist, so dass das Gerät in der Lage ist, selbst für einen schnellen Austausch, falls erforderlich, sogar während eine Glasscheibe aufgeladen oder abgeladen wird, des Werkzeugs (9) mit dem jeweiligen Werkzeughalterungselement (12) zu sorgen, das mit dem Kopf (8) verbunden ist, mit irgendeinem anderen Werkzeug (9) mit dem jeweiligen Werkzeughalterungselement (12), das an dem Magazin (28) bereitgestellt wird, indem es den Kopf (8) unmittelbar neben einen leeren Ständer des Magazins bewegt, anschlieβend ein Werkzeug mit dem jeweiligen Werkzeughalterungselement (12) absetzt, das innerhalb des leeren Ständers ausgetauscht werden soll, und dann ein neues Werkzeug (9) mit dem jeweiligen Werkzeughalterungselement (12) von einem anderen Ständer des Magazins aufgreift.

2. Schneidgerät nach Anspruch 1, **dadurch gekennzeichnet, dass** das Gerät ferner ein Magazin mit Hilfsköpfen (39) zum Durchführen spezieller Betriebsabläufe umfasst, einschließlich wenigstens eines Hilfskopfes, der an den portalartigen Wagen (4) des Geräts verbunden werden kann.

3. Schneidgerät nach Anspruch 1, **dadurch gekennzeichnet, dass** der Verbindungsabschnitt des Werkzeughalterungselements (12) eine im wesentlichen kegelförmige Form aufweist, mit einem im wesentlichen zylindrisehen Endabschnitt (13), der in Umfangsrichtung eine Einschnürung (14) aufweist, und dass der Kopf (8) einen kegelförmigen Sitz (18) aufweist, dessen Form komplementär zu der des Verbindungsabschnitts ausgebildet ist, wobei Federmittel (21) angebracht sind, die zum Zusammenwirken mit der Einschnürung in Umfangsrichtung als Schnappverbindung des Verbindungsabschnitts mit dem Sitz eingerichtet sind.

4. Schneidgerät nach Anspruch 1, **dadurch gekennzeichnet, dass** die elektronischen Steuerungsmittel dazu eingerichtet sind, den Werkzeugwechselzyklus auf eine Weise zu steuern, die durch den Benutzer programmierbar ist, und, falls erforderlich, während des Aufladens und Abladens der Glasscheibe.

5. Schneidgerät nach Anspruch 1, **dadurch gekennzeichnet, dass** das Magazin (28) ein Gestell (29) mit mehreren Stützständern für jeweilige Werkzeughalterungselemente (12) beinhaltet, die jeder dem jeweiligen Werkzeug (9) zugeordnet sind, und dass das Gestell senkrecht zwischen einer niederen Ruhestellung unterhalb der Unterlagetafel (3) der Scheibe (L) und einer erhöhten Betriebsstellung, bewegbar ist, die sich über die Unterlagetafel (3) erstreckt.

6. Schneidgerät nach Anspruch 1, **dadurch gekennzeichnet, dass** ein Deckel (34) vorgesehen ist, der das Magazin (28) an der Oberseite abdeckt, wenn letzteres sich in der niederen Ruhestellung befindet, wobei der Deckel (34) zwischen einer Betriebsstellung und einer Nicht-Betriebsstellung bewegbar ist, in der er ermöglicht, das Magazin von der niederen Ruhestellung in die erhöhte Betriebsstellung anzuheben.

## Revendications

1. Appareil de coupe de plaques de verre, comprenant :
- une table (2),
- une platine (3) destinée aux plaques de verre (L) et supportée par la table (2),
- un chariot en portique (4) mobile sur la table (2) le long d'un premier axe horizontal (X),
- un deuxième chariot (7) mobile sur le chariot en portique (4) le long d'un deuxième axe horizontal (Y) perpendiculaire au premier axe (X),
- une tête (8) supportant un outil de coupe (9) mobile sur le deuxième chariot (7) le long d'un axe vertical (Z), et également rotatif autour de cet axe (Z),
- des moyens moteurs destinés à faire réaliser des mouvements au chariot en portique (4), au deuxième chariot (7) et à la tête (8), et
- des moyens de commande électroniques pour lesdits moyens moteurs,
**caractérisé en ce que** l'outil (9) est relié de façon permanente à un élément porte-outil (12) comportant une section de couplage qui est reliée de façon amovible à la tête (8), et **en ce que** l'appareil comprend en outre au moins un magasin d'outils (28) supporté par la table (2), dans lequel chaque outil (9) est relié de façon permanente à un élément porte-outil respectif (12) comportant une section de couplage à la tête (8), de sorte que l'appareil est apte à réaliser par lui-même un remplacement rapide, si nécessaire, même pendant le chargement et le déchargement d'une plaque de verre, de l'outil (9) doté de l'élément porte-outil respectif (12) couplé à la tête (8) par tout autre outil (9) doté de l'élément porte-outil respectif (12) situé au niveau du magasin (28), en déplaçant la tête (8) adjacente à un emplacement vide du magasin, à déposer ensuite un outil doté de l'élément porte-outil respectif (12) à remplacer à l'intérieur dudit emplacement vide, puis à retirer un nouvel outil (9) doté de l'élément porte-outil respectif (12) d'un autre emplacement dudit magasin.

2. Appareil de coupe selon la revendication 1, **caractérisé en ce que** l'appareil comprend en outre un magasin de têtes auxiliaires (39) destinées à réaliser des opérations spéciales, incluant au moins une tête auxiliaire qui peut être couplée au chariot en portique (4) de l'appareil.

3. Appareil de coupe selon la revendication 1, **caractérisé en ce que** la section de couplage de l'élément porte-outil (12) a une forme sensiblement conique avec une portion d'extrémité (13) sensiblement cylindrique présentant un évidement circonférentiel (14), et la tête (8) comporte un siège conique (18) ayant une forme complémentaire à celle de ladite section de couplage, dans lequel sont montés des moyens élastiques (21) adaptés pour coopérer avec ledit évidement circonférentiel 14 en vue de l'engagement pas encliquetage de la section de couplage à l'intérieur dudit siège.

4. Appareil de coupe selon la revendication 1, **caractérisé en ce que** lesdits moyens de commande électroniques sont adaptés pour commander le cycle de changement d'outil de façon programmable par l'utilisateur et si nécessaire pendant le chargement et le déchargement de la plaque de verre.

5. Appareil de coupe selon la revendication 1, **caractérisé en ce que** ledit magasin (28) inclut à un support (29) comportant une pluralité d'emplacements de support pour des éléments porte-outil respectifs (12), chacun d'eux étant associé à l'outil respectif (9), et **en ce que** ledit support est mobile verticalement entre une position de repos abaissée au-dessous de la platine (3) de la plaque (L) et une position opérante soulevée s'étendant au-dessus de ladite platine (3).

6. Appareil de coupe selon la revendication 1, **caractérisé en ce qu'**il est prévu un couvercle (34) qui recouvre le magasin (28) à la partie supérieure lorsque ce dernier est dans ladite position de repos abaissée, ledit couvercle (34) étant mobile entre une position opérante et une position inopérante, dans laquelle il permet de soulever le magasin de la position de repos abaissée à la position opérante soulevée.
